# EUROPEAN PATENT APPLICATION

(11) **EP 3 211 909 A1**
(43) Date of publication of application: **30.08.2017**
(21) Application number: 15877370.5
(22) Date of filing: 15.07.2015
(51) Int. Cl.: H04N 21/472

(54) **METHOD AND APPARATUS FOR PRESENTING DIGITAL MEDIA CONTENT**

(30) Priority: 11.02.2015 CN 201510072071
(71) Applicant: Huawei Technologies Co., Ltd., Longgang District Shenzhen, Guangdong 518129 (CN); Ekstrand, Simon, Eslov 999027 (SE)
(72) Inventor: EKSTRAND, Simon, Eslov 999027 (SE); CHENG, Cheng, Shenzhen, Guangdong 518129 (CN)
(74) Representative: Epping - Hermann - Fischer
(86) International application number: PCT/CN2015/084125
(87) International publication number: WO 2016/127570

(57) **Abstract**

Embodiments of the present invention provide a method for presenting digital media content and an apparatus, where the method includes: determining abnormally presented content in the digital media content, where the abnormally presented content includes at least one of content presented at an abnormal speed and presented content that is not watched/read and/or listened to, and presenting, according to a first visual style, a part that is corresponding to the abnormally presented content and on a playback progress interface. In the embodiments of the present invention, a part that is corresponding to abnormally presented digital media content and on a playback progress interface is presented according to a predetermined visual style. In this way, the abnormally presented part can be identified and played again according to the predetermined visual style. Therefore, in the embodiments of the present invention, normally presented digital media content can be distinguished from abnormally presented digital media content.

## Description

This application claims priority to Chinese Patent Application No. 201510072071.7, filed with the Chinese Patent Office on February 11, 2015 and entitled "METHOD FOR PRESENTING DIGITAL MEDIA CONTENT AND APPARATUS", which is incorporated herein by reference in its entirety.

### TECHNICAL FIELD

Embodiments of the present invention relate to the information processing field, and more specifically, to a method for presenting digital media content and an apparatus.

### BACKGROUND

With continuous development of multimedia technologies, digital media content is also more widely used. The digital media content generally includes many types such as a text, an image, an audio, a video, and an electronic book. Currently, a user can watch/read and/or listen to the digital media content on user equipment. For example, the user can play a movie, a television program, video, music, an electronic book, or the like on the user equipment.

When playing digital media content, a playback device in current technologies may present a loading progress and a playback progress of the content by using a playback progress bar. In addition, the user may perform an operation such as a fast-forward operation, a rewind operation, or a dragging operation on the playback progress bar. This part of content may be referred to as abnormally presented content. However, when the user does not watch/read and/or listen to played content, or after performing a fast-forward operation, a rewind operation, or a dragging operation, the user cannot identify a location of content that is played before the fast-forward operation, the rewind operation, or the dragging operation is performed, that is, the user cannot distinguish normally presented digital media content from abnormally presented digital media content.

### SUMMARY

Embodiments of the present invention provide a method for presenting digital media content and an apparatus, with which normally presented digital media content can be distinguished from abnormally presented digital media content.

According to a first aspect, a method for presenting digital media content is provided, including: determining abnormally presented content in the digital media content, where the abnormally presented content includes at least one of content presented at an abnormal speed and presented content that is not watched/read and/or listened to; and presenting, according to a first visual style, a part that is corresponding to the abnormally presented content and on a playback progress interface.

With reference to the first aspect, in a first possible implementation manner of the first aspect, the method further includes: determining normally presented content in the digital media content, where the normally presented content includes content that is presented at a normal speed and watched/read and/or listened to; and presenting, according to a second visual style, a part that is corresponding to the normally presented content and on the playback progress interface, where the second visual style is different from the first visual style.

With reference to the first aspect or the first possible implementation manner of the first aspect, in a second possible implementation manner of the first aspect, the method further includes: acquiring data collection information, where the data collection information includes at least one of operation information of a user on the playback progress interface, video collection information of audio-visual behavior of the user, and usage information of a device used by the user, where the determining abnormally presented content in the digital media content includes: determining the abnormally presented content in the digital media content according to the data collection information.

With reference to the second possible implementation manner of the first aspect, in a third possible implementation manner of the first aspect, the acquiring data collection information includes: acquiring, from a video surveillance device, the video collection information that is in the video surveillance device and about the user; or acquiring, from the device used by the user, the usage information recorded by the used device according to a usage process of the user.

With reference to the second or third possible implementation manner of the first aspect, in a fourth possible implementation manner of the first aspect, the operation information includes at least one of fast-forward operation information, rewind operation information, and dragging operation information that are of the user on the playback progress interface.

With reference to any one of the first to fourth possible implementation manners of the first aspect, in a fifth possible implementation manner of the first aspect, the method further includes: determining buffered content in the digital media content; and presenting, according to a third visual style, a part that is corresponding to the buffered content and on the playback progress interface, where the third visual style is different from the first visual style and the second visual style.

With reference to the first aspect or any one of the first to fifth possible implementation manners of the first aspect, in a sixth possible implementation manner of the first aspect, the digital media content includes at least one of video content, audio content, and text content.

According to a second aspect, an apparatus is provided, including: a determining unit, configured to determine abnormally presented content in the digital media content, where the abnormally presented content includes at least one of content presented at an abnormal speed and presented content that is not watched/read and/or listened to; and a presenting unit, configured to present, according to a first visual style, a part that is corresponding to the abnormally presented content and on a playback progress interface.

With reference to the second aspect, in a first possible implementation manner of the second aspect, the determining unit is further configured to determine normally presented content in the digital media content, where the normally presented content includes content that is presented at a normal speed and watched/read and/or listened to; and the presenting unit is further configured to present, according to a second visual style, a part that is corresponding to the normally presented content and on the playback progress interface, where the second visual style is different from the first visual style.

With reference to the second aspect or the first possible implementation manner of the second aspect, in a second possible implementation manner of the second aspect, the apparatus further includes: an acquiring unit, configured to acquire data collection information, where the data collection information includes at least one of operation information of a user on the playback progress interface, video collection information of audio-visual behavior of the user, and usage information of a device used by the user; where the determining unit is specifically configured to determine the abnormally presented content in the digital media content according to the data collection information.

With reference to the second possible implementation manner of the second aspect, in a third possible implementation manner of the second aspect, the acquiring unit is specifically configured to: acquire, from a video surveillance device, the video collection information that is in the video surveillance device and about the user; or acquire, from the device used by the user, the usage information recorded by the used device according to a usage process of the user.

With reference to the second or third possible implementation manner of the second aspect, in a fourth possible implementation manner of the second aspect, the operation information includes at least one of fast-forward operation information, rewind operation information, and dragging operation information that are of the user on the playback progress interface.

With reference to any one of the first to fourth possible implementation manners of the second aspect, in a fifth possible implementation manner of the second aspect, the determining unit is further configured to determine buffered content in the digital media content; and the presenting unit is further configured to present, according to a third visual style, a part that is corresponding to the buffered content and on the playback progress interface, where the third visual style is different from the first visual style and the second visual style.

With reference to the second aspect or any one of the first to fifth possible implementation manners of the second aspect, in a sixth possible implementation manner of the second aspect, the digital media content includes at least one of video content, audio content, and text content.

In the embodiments of the present invention, a part that is corresponding to abnormally presented digital media content and on a playback progress interface is presented according to a predetermined visual style. In this way, the abnormally presented part can be identified and played again according to the predetermined visual style. Therefore, in the embodiments of the present invention, normally presented digital media content can be distinguished from abnormally presented digital media content.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for presenting digital media content according to an embodiment of the present invention;
FIG. 2 is a schematic flowchart of a method for presenting digital media content according to another embodiment of the present invention;
FIG. 3 is a schematic flowchart of a process of a method for presenting digital media content according to an embodiment of the present invention;
FIG. 4 is a schematic diagram of a playback progress interface according to an embodiment of the present invention;
FIG. 5 is a schematic block diagram of an apparatus according to an embodiment of the present invention; and
FIG. 6 is a schematic block diagram of an apparatus according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

User equipment (UE for short, English: User Equipment) may be a mobile terminal, for example, a mobile phone (or referred to as a "cellular" phone) and a computer that has a mobile terminal. For example, the user equipment may be a portable, pocket-sized, handheld, computer built-in, or vehicle-mounted mobile apparatus. The user equipment may also be a device such as a smart television or a tablet computer. The embodiments of the present invention set no limitation on a type of the user equipment, as long as digital media content can be watched/read and/or listened to on the user equipment.

The digital media content may include a video, an audio, and a text, where video content may be a movie, a television program, and the like; audio content may include an audio such as music and a broadcast; and text content may be an electronic book and the like.

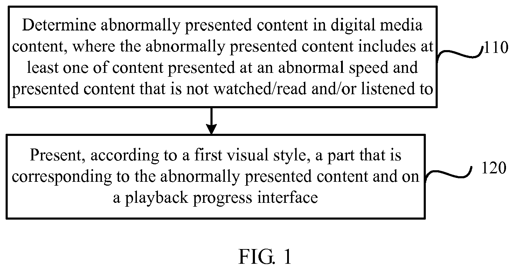

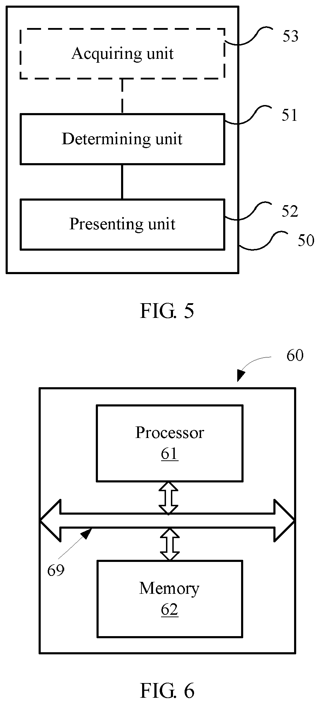

FIG. 1 is a schematic flowchart of a method for presenting digital media content according to an embodiment of the present invention. The method in FIG. 1 may be executed by an apparatus shown in FIG. 5 or FIG. 6, where the apparatus may be user equipment. The method includes the following steps:
110. Determine abnormally presented content in digital media content, where the abnormally presented content includes at least one of content presented at an abnormal speed and presented content that is not watched/read and/or listened to.
120. Present, according to a first visual style, a part that is corresponding to the abnormally presented content and on a playback progress interface.

In this embodiment of the present invention, a part that is corresponding to abnormally presented digital media content and on a playback progress interface is presented according to a predetermined visual style. In this way, the abnormally presented part can be identified and played again according to the predetermined visual style. Therefore, in this embodiment of the present invention, normally presented digital media content can be distinguished from abnormally presented digital media content.

Optionally, as another embodiment, the digital media content may include at least one of video content, audio content, and text content, where the text content may include an electronic book.

It should be understood that when the user equipment presents the digital media content, a content playback progress may be a location of a current frame in a length of the entire digital media content. Content ahead of the current frame is content that has been played, and content following the current frame is content that is not played. Content indicated by the content playback progress is not necessarily content that a user actually watches/reads and/or listens to, where content played by the user in a manner of performing a fast-forward operation, a rewind operation, or dragging a playback progress bar may exist, and content that is normally played by the digital media content but a user does not watch/read and/or listen to may also exist.

Specifically, watching/reading and/or listening may include watching/reading and listening. For the video content or the text content, the content may be watched or read, and for the audio content, the content may be listened to.

For the video content or the audio content, the video content or the audio content may be played on the user equipment, and for an electronic book, the electronic book may be read on the user equipment.

When watching/reading and/or listening to the digital media content, a user may browse the following content because the user is curious about the following plot or because of another reason. The content indicated by the content playback progress may include normally presented content and abnormally presented content. The normally presented content is content that is normally watched/read and/or listened to, that is, content that a user normally watches/reads and/or listens to; the abnormally presented content is content that is abnormally watched/read and/or listened to. The normally presented content may be content that is played at a normal speed and watched/read and/or listened to, and the abnormally presented content may include content presented at an abnormal speed and presented content that is not watched/read and/or listened to. The presented content that is not watched/read and/or listened to may be content that is presented (including presentation at a normal speed and presentation at an abnormal speed) by the digital media content but a user does not watch/read and/or listen to. For example, the digital media content is still presented while a user is performing another operation such as making/answering a call and printing, but does not actually watch/read and/or listen to the digital media content.

It should further be understood that for the digital media content, a presentation process may also be a process of playing the digital media content.

Specifically, the playback progress interface may be a progress bar in a video player or an audio player, or may be contents in an e-book reader. This embodiment of the present invention sets no limitation on a form of the playback progress interface, as long as a playback progress of the digital media content can be presented. The playback progress interface can present the playback progress of the digital media content, that is, presented content of the digital media content may be corresponding to a part of the playback progress interface.

In this embodiment of the present invention, the part that is corresponding to the abnormally presented content and on the playback progress interface may be presented according to the first visual style. Optionally, as another embodiment, this embodiment of the present invention sets no limitation on a form of the first visual style, as long as the part that is corresponding to the abnormally presented content and on the playback progress interface can be identified according to the first visual style. In this way, the abnormally presented digital media content may be replayed.

Specifically, as an embodiment, the first visual style may be a gradient pattern, may be a stripe pattern, or may be a pattern of another style. Optionally, as another embodiment, two ends of the part that is corresponding to the abnormally presented content and on the playback progress interface may also be marked according to a presentation manner of the predetermined first visual style, and a pattern style may not be changed in the middle part, that is, a previous playback progress interface may be kept. It should be understood that this embodiment of the present invention sets no limitation on a style of a mark, for example, the mark may be a straight-line mark, may be a point mark, or may be a surface mark.

Optionally, as another embodiment, in this embodiment of the present invention, a part that is corresponding to digital media content at a different playback speed and that is on the playback progress interface may be presented by using a different visual style.

It should be understood that this embodiment of the present invention sets no limitation on how to determine the abnormally presented content in the digital media content. For example, in this embodiment of the present invention, an operation of a user performed on the playback progress interface may be acquired, and digital media content corresponding to a part, on which the operation is performed, on the playback progress interface is determined as the abnormally presented content according to the operation; and a playback speed of the digital media content may also be acquired, and a part that is corresponding to digital media content watched/read and/or listened to at an abnormal playback speed and that is on the playback progress is determined. It should be understood that content on which an operation is performed and on the playback progress interface may be understood as content presented at an abnormal speed.

Specifically, for a video, an audio, or the like, the playback speed of the digital media content may be acquired by using an existing method. This embodiment of the present invention sets no limitation on a method for acquiring the playback speed of the digital media content. For character content such as an electronic book, the playback speed of the digital media content may be acquired by calculating time spent by a user reading content on each page, and whether the user reads at a normal speed is determined by comparing the reading time of the user with standard reading time. The standard reading time may be calibrated based on initial values of reading speeds of a large quantity of users and according to a habit of each user.

Specifically, the presented content that is not watched/read and/or listened to may be content that is presented (including presentation at a normal speed and presentation at an abnormal speed) by the digital media content but a user does not watch/read and/or listen to. For example, when a video is normally played or an electronic book is at a normal page-turning speed, if a user stays away for a period of time, content that is of the video or the electronic book and corresponding to this period of time is the presented content that is not watched/read and/or listened to.

For the presented content that is not watched/read and/or listened to, in this embodiment of the present invention, behavior of a user may be determined by using a camera or another surveillance device, or played content that is not watched/read and/or listened to may be determined by using information collected from another device. For example, if the played content that is not watched/read and/or listened to is caused when a user uses a telephone, prints a material, or performs an operation on another device, whether the user performs an operation is determined by acquiring related feedback information from the telephone, the printer, or anther device in this embodiment of the present invention.

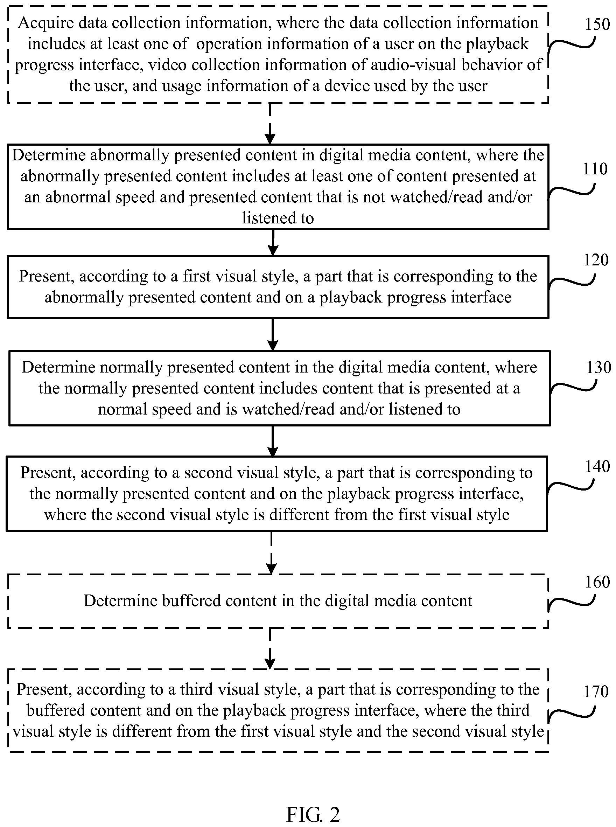

FIG. 2 is a schematic flowchart of a method for presenting digital media content according to another embodiment of the present invention. The method in FIG. 2 may be executed by an apparatus shown in FIG. 5 or FIG. 6, where the apparatus may be user equipment. It should be understood that a same step in FIG. 2 and FIG. 1 uses a same reference numeral, and the method further includes the following steps:
130. Determine normally presented content in the digital media content, where the normally presented content includes content that is presented at a normal speed and watched/read and/or listened to.
140. Present, according to a second visual style, a part that is corresponding to the normally presented content and on the playback progress interface, where the second visual style is different from the first visual style.

In this embodiment of the present invention, a part that is corresponding to abnormally presented digital media content and on a playback progress interface is presented according to a predetermined visual style. In this way, the abnormally presented part can be identified and played again according to the predetermined visual style. Therefore, in this embodiment of the present invention, normally presented digital media content can be distinguished from abnormally presented digital media content.

It should be understood that a method for determining the normally presented content in the digital media content in 130 may be similar to a method for determining the abnormally presented content in the digital media content in 110 of FIG. 1. To avoid repetition, details are not described herein again.

It should further be understood that the first visual style is different from the second visual style, so that content normally watched/read and/or listened to can be distinguished from content abnormally watched/read and/or listened to.

Optionally, as another embodiment, the method shown in FIG. 2 may further include the following steps:
150. Acquire data collection information, where the data collection information includes at least one of operation information of a user on the playback progress interface, video collection information of audio-visual behavior of the user, and usage information of a device used by the user.

In 110, the user equipment in this embodiment of the present invention may determine the abnormally presented content in the digital media content according to the data collection information; in 130, the user equipment in this embodiment of the present invention may determine the normally presented content in the digital media content according to the data collection information.

Optionally, as another embodiment, the operation information may include at least one of fast-forward operation information, rewind operation information, and dragging operation information that are of the user on the playback progress interface.

Optionally, as another embodiment, in 150, the user equipment may acquire, from a video surveillance device, the video collection information that is in the video surveillance device and about the user; or acquire, from the device used by the user, the usage information recorded by the used device according to a usage process of the user.

Specifically, the video collection information of the audio-visual behavior of the user may be acquired from a surveillance device such as a camera. The surveillance device such as a camera may monitor a visible area that is in front of the user equipment, determine whether the user is in the visible area, and feed back a determining result to the user equipment. If the user is not in the visible area, it may be understood that the user does not watch/read and/or listen to the digital media content.

The device used by the user may be a device such as a telephone or a printer, or may be the user equipment. For example, although the user is in the visible area that is in front of the user equipment, the user does not watch/read and/or listen to the digital media content but is using another device such as a telephone or a printer, or the user may be using the user equipment but does not actually watch/read and/or listen to the digital media content.

The device used by the user may record the usage process of the user as the usage information, and the user equipment may acquire the usage information and determine the abnormally presented content in the digital media content according to the usage information.

Optionally, as another embodiment, this embodiment of the present invention may further include the following steps:
160. Determine buffered content in the digital media content.
170. Present, according to a third visual style, a part that is corresponding to the buffered content and on the playback progress interface, where the third visual style is different from the first visual style and the second visual style.

In this embodiment of the present invention, a part that is corresponding to abnormally presented digital media content and on a playback progress interface is presented according to a predetermined visual style. In this way, the abnormally presented part can be identified and played again according to the predetermined visual style. Therefore, in this embodiment of the present invention, normally presented digital media content can be distinguished from abnormally presented digital media content.

In addition, buffered content is presented on the playback progress interface according to another visual style, so that the buffered content can further be identified.

It should be understood that this embodiment of the present invention sets no limitation on how to determine the buffered content in the digital media content.

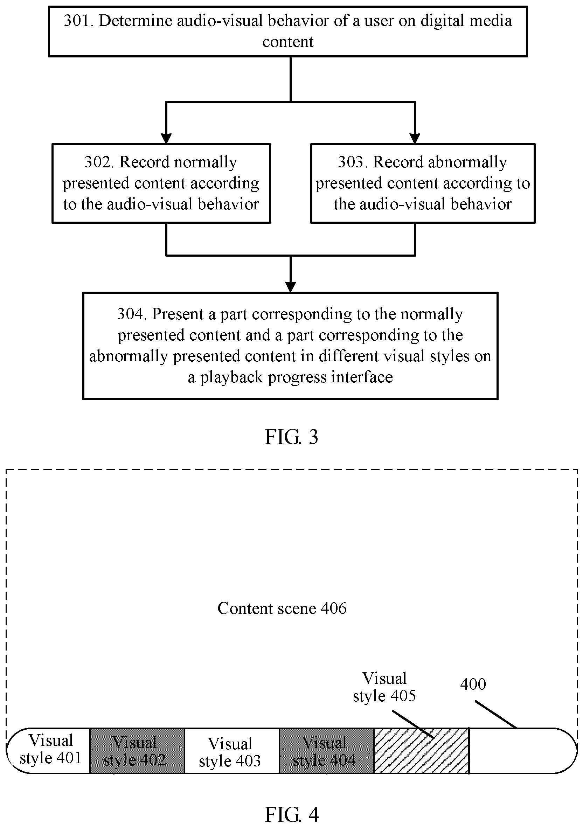

FIG. 3 is a schematic flowchart of a process of a method for presenting digital media content according to an embodiment of the present invention. The process of FIG. 3 may be executed by an apparatus shown in FIG. 5 or FIG. 6, where the apparatus may be user equipment. The process may include the following steps:
301. Determine audio-visual behavior of a user on digital media content.

It should be understood that the audio-visual behavior in this embodiment of the present invention may be playback behavior, or may be reading behavior. For example, for video content or audio content, the video content or the audio content may be played on the user equipment, and for an electronic book, the electronic book may be read on the user equipment.

Specifically, the audio-visual behavior may include abnormal audio-visual behavior and normal audio-visual behavior. The normal audio-visual behavior may be corresponding to normally presented content, and the abnormal audio-visual behavior may be corresponding to abnormally presented content. The abnormally presented content may include at least one of content presented at an abnormal speed and presented content that is not watched/read and/or listened to, and the normally presented content may include content that is presented at a normal speed and watched/read and/or listened to. The presented content that is not watched/read and/or listened to may be content that is presented (including presentation at a normal speed and presentation at an abnormal speed) by the digital media content but a user does not watch/read and/or listen to. For example, the digital media content is still presented while the user is performing another operation such as making/answering a call and printing, but does not actually watch/read and/or listen to the digital media content.

Optionally, as another embodiment, the user equipment may acquire data collection information, where the data collection information includes at least one of speed operation information of the user on a playback progress interface, video collection information of the audio-visual behavior of the user, and usage information of another device used by the user. In this embodiment of the present invention, the normal audio-visual behavior of the user and the abnormal audio-visual behavior of the user may be determined according to the data collection information.
302. Record normally presented content according to the audio-visual behavior.
303. Record abnormally presented content according to the audio-visual behavior.
   The user equipment in this embodiment of the present invention may determine, according to a result of determining the audio-visual behavior, content that is corresponding to the abnormal audio-visual behavior and in the digital media content as the abnormally presented content; the user equipment in this embodiment of the present invention may determine, according to the result of determining, content that is corresponding to the normal audio-visual behavior and in the digital media content as the normally presented content.
304. Present a part corresponding to the normally presented content and a part corresponding to the abnormally presented content in different visual styles on a playback progress interface.

Specifically, as an embodiment, a visual style may be a gradient pattern, may be a stripe pattern, or may be a pattern of another style. This embodiment of the present invention sets no limitation thereto.

Optionally, as another embodiment, a mark may be made on the playback progress interface according to a presentation manner of a visual style. It should be understood that this embodiment of the present invention sets no limitation on a style of the mark, for example, the mark may be a straight-line mark, may be a point mark, or may be a surface mark. This embodiment of the present invention sets no limitation thereto, as long as the mark can distinguish normally presented content from abnormally presented content.

FIG. 4 is a schematic diagram of a playback progress interface according to an embodiment of the present invention. In FIG. 4, video content of digital media content is used as an example to describe the playback progress interface. The playback progress interface 400 includes a visual style 401, a visual style 402, a visual style 403, a visual style 404, a visual style 405, and a content scene 406.

The playback progress interface 400 may be a playback progress bar. The content scene 406 may display different scenes according to playback of the digital media content, and the content scene 406 may include a first scene, a second scene, a third scene, a fourth scene, and the like.

As shown in FIG. 4, if a user normally watches a video and reaches the first scene of playback content, the playback progress interface records a part normally played by the user, that is, a part corresponding to the visual style 401.

Starting from the first scene, when the user reaches the second scene of the playback content by performing a fast-forward operation to skip part content or by not watching the part content, the playback progress interface records the part abnormally played, that is, a part corresponding to the visual style 402.

Starting from the second scene, when the user reaches the third scene of the playback content by normally watching the video content, the playback progress interface records a part normally played by the user. In this case, the part normally played is a part corresponding to the visual style 403.

Starting from the third scene, when the user reaches the fourth scene of the playback content by performing a fast-forward operation to skip part content or by not watching the part content, the playback progress interface records the part abnormally played, that is, a part corresponding to the visual style 404.

The visual style 405 may indicate a part that is corresponding to buffered content of the video content and on the playback progress interface.

It should be understood that the visual style 401 and the visual style 403 are the same visual style, the visual style 402 and the visual style 404 are the same visual style, and the visual style 401 and the visual style 402 are different visual styles. The visual style 405 is different from the other four visual styles. Gray is used to represent the visual style 402 and the visual style 404 in this embodiment of the present invention. Stripe is used to represent the visual style 405 in this embodiment of the present invention. It should be understood that a representation method of the visual style is not limited in this embodiment of the present invention.

It should further be understood that if the digital media content is an electronic book, skipped content may be a part directly skipped by using contents, may be a part skipped by entering a page number, or may be a part skipped by fast reading. This embodiment of the present invention sets no limitation thereto.

FIG. 5 is a schematic block diagram of an apparatus according to an embodiment of the present invention. The apparatus shown in FIG. 5 may implement all steps and methods in the foregoing method embodiments. To avoid repetition, details are not described herein again. The apparatus 50 may include:
a determining unit 51, configured to determine abnormally presented content in digital media content, where the abnormally presented content includes at least one of content presented at an abnormal speed and presented content that is not watched/read and/or listened to; and
a presenting unit 52, configured to present, according to a first visual style, a part that is corresponding to the abnormally presented content and on a playback progress interface.

In this embodiment of the present invention, a part that is corresponding to abnormally presented digital media content and on a playback progress interface is presented according to a predetermined visual style. In this way, the abnormally presented part can be identified and played again according to the predetermined visual style. Therefore, in this embodiment of the present invention, normally presented digital media content can be distinguished from abnormally presented digital media content.

Optionally, as another embodiment, the determining unit 5 may further determine normally presented content in the digital media content, where the normally presented content includes content that is presented at a normal speed and watched/read and/or listened to, and the presenting unit is further configured to present, according to a second visual style, a part that is corresponding to the normally presented content and on the playback progress interface, where the second visual style is different from the first visual style.

Optionally, as another embodiment, the apparatus 50 may further include:
an acquiring unit 53, configured to acquire data collection information, where the data collection information includes at least one of operation information of a user on the playback progress interface, video collection information of audio-visual behavior of the user, and usage information of a device used by the user, where the determining unit 51 may determine the abnormally presented content in the digital media content according to the data collection information.

Optionally, as another embodiment, the determining unit 51 may further determine the normally presented content in the digital media content according to the data collection information.

Optionally, as another embodiment, the acquiring unit 53 may acquire, from a video surveillance device, the video collection information that is in the video surveillance device and about the user; or acquire, from the device used by the user, the usage information recorded by the used device according to a usage process of the user.

Optionally, as another embodiment, the operation information includes at least one of fast-forward operation information, rewind operation information, and dragging operation information that are of the user on the playback progress interface.

Optionally, as another embodiment, the determining unit 51 may further determine buffered content in the digital media content, and the presenting unit 52 may further present, according to a third visual style, a part that is corresponding to the buffered content and on the playback progress interface, where the third visual style is different from the first visual style and the second visual style.

Optionally, as another embodiment, the digital media content may include at least one of video content, audio content, and text content.

FIG. 6 is a schematic block diagram of an apparatus according to another embodiment of the present invention. The apparatus 60 in FIG. 6 may be used to implement all steps and methods in the foregoing method embodiments. The apparatus in FIG. 6 includes a processor 61 and a memory 62. The processor 61 and the memory 62 are connected by using a bus system 69.

The processor 61 controls an operation of the apparatus 60. The memory 62 may include a read-only memory and a random access memory, and provides an instruction and data to the processor 61. A part of the memory 62 may further include a non-volatile random access memory (NVRAM). Components of the apparatus 60 are coupled together by using the bus system 69, where in addition to a data bus, the bus system 69 includes a power bus, a control bus, and a status signal bus. However, for clear description, various types of buses in the figure are marked as the bus system 69.

The processor 61 may be an integrated circuit chip and has a signal processing capability. The processor 61 may be a general purpose processor, a digital signal processor (DSP), an application-specific integrated circuit (ASIC), a field programmable gate array (FPGA), or another programmable logic device, a discrete gate or a transistor logic device, or a discrete hardware component, which may implement or execute methods, steps, and logical block diagrams disclosed in the embodiments of the present invention. The general purpose processor may be a microprocessor or the processor may be any conventional processor and the like. The processor 61 reads information in the memory 62, and controls components of the apparatus 60 in combination with hardware of the processor 61.

The methods in FIG. 1 and FIG. 2 may be implemented in the apparatus 60 in FIG. 6, and to avoid repetition, details are not described herein again.

Specifically, under control of the processor 61, the apparatus 60 completes the following operations:
determining abnormally presented content in digital media content, where the abnormally presented content includes at least one of content presented at an abnormal speed and presented content that is not watched/read and/or listened to; and
presenting, according to a first visual style, a part that is corresponding to the abnormally presented content and on a playback progress interface.

In this embodiment of the present invention, a part that is corresponding to abnormally presented digital media content and on a playback progress interface is presented according to a predetermined visual style. In this way, the abnormally presented part can be identified and played again according to the predetermined visual style. Therefore, in this embodiment of the present invention, normally presented digital media content can be distinguished from abnormally presented digital media content.

Optionally, as another embodiment, the processor 61 may further determine normally presented content in the digital media content, where the normally presented content includes content that is presented at a normal speed and watched/read and/or listened to, and present, according to a second visual style, a part that is corresponding to the normally presented content and on the playback progress interface, where the second visual style is different from the first visual style.

Optionally, as another embodiment, the processor 61 may further acquire data collection information, where the data collection information includes at least one of operation information of a user on the playback progress interface, video collection information of audio-visual behavior of the user, and usage information of a device used by the user; the processor 61 may determine the abnormally presented content in the digital media content according to the data collection information.

Optionally, as another embodiment, the processor 61 may acquire, from a video surveillance device, the video collection information that is in the video surveillance device and about the user; or acquire, from the device used by the user, the usage information recorded by the used device according to a usage process of the user.

Optionally, as another embodiment, the operation information includes at least one of fast-forward operation information, rewind operation information, and dragging operation information that are of the user on the playback progress interface.

Optionally, as another embodiment, the processor 61 may further determine buffered content in the digital media content, and present, according to a third visual style, a part that is corresponding to the buffered content and on the playback progress interface, where the third visual style is different from the first visual style and the second visual style.

Optionally, as another embodiment, the digital media content includes at least one of video content, audio content, and text content.

It should be understood that "one embodiment" or "an embodiment" mentioned in the entire specification means that specific features, structures, or characteristics related to the embodiments are included in at least one embodiment of the present invention. Therefore, each "in one embodiment" or "in an embodiment" exists in the entire specification does not necessarily refer to a same embodiment. In addition, these specific features, structures, or characteristics may be combined in one or more embodiments in any proper manner. Sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the embodiments of the present invention, "B corresponding to A" indicates that B is associated with A, and B may be determined according to A. However, it should further be understood that determining B according to A does not mean that B is determined only according to A, and B may also be determined according to A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

With descriptions of the foregoing embodiments, a person skilled in the art may clearly understand that the present invention may be implemented by hardware, firmware or a combination thereof.

In summary, what is described above is merely exemplary embodiments of the technical solutions of the present invention, but is not intended to limit the protection scope of the present invention. Any modification, equivalent replacement, or improvement made without departing from the spirit and principle of the present invention shall fall within the protection scope of the present invention.

## Claims

1. A method for presenting digital media content, comprising:
determining abnormally presented content in the digital media content, wherein the abnormally presented content comprises at least one of content presented at an abnormal speed and presented content that is not watched/read and/or listened to; and
presenting, according to a first visual style, a part that is corresponding to the abnormally presented content and on a playback progress interface.

2. The method according to claim 1, further comprising:
determining normally presented content in the digital media content, wherein the normally presented content comprises content that is presented at a normal speed and watched/read and/or listened to; and
presenting, according to a second visual style, a part that is corresponding to the normally presented content and on the playback progress interface, wherein the second visual style is different from the first visual style.

3. The method according to claim 1 or 2, further comprising:
acquiring data collection information, wherein the data collection information comprises at least one of operation information of a user on the playback progress interface, video collection information of audio-visual behavior of the user, and usage information of a device used by the user, wherein
the determining abnormally presented content in the digital media content comprises:
determining the abnormally presented content in the digital media content according to the data collection information.

4. The method according to claim 3, wherein the acquiring data collection information comprises:
acquiring, from a video surveillance device, the video collection information that is in the video surveillance device and about the user; or
acquiring, from the device used by the user, the usage information recorded by the used device according to a usage process of the user.

5. The method according to claim 3 or 4, wherein the operation information comprises at least one of fast-forward operation information, rewind operation information, and dragging operation information that are of the user on the playback progress interface.

6. The method according to any one of claims 2 to 5, further comprising:
determining buffered content in the digital media content; and
presenting, according to a third visual style, a part that is corresponding to the buffered content and on the playback progress interface, wherein the third visual style is different from the first visual style and the second visual style.

7. The method according to any one of claims 1 to 6, wherein the digital media content comprises at least one of video content, audio content, and text content.

8. An apparatus, comprising:
a determining unit, configured to determine abnormally presented content in the digital media content, wherein the abnormally presented content comprises at least one of content presented at an abnormal speed and presented content that is not watched/read and/or listened to; and
a presenting unit, configured to present, according to a first visual style, a part that is corresponding to the abnormally presented content and on a playback progress interface.

9. The apparatus according to claim 8, wherein the determining unit is further configured to:
determine normally presented content in the digital media content, wherein the normally presented content comprises content that is presented at a normal speed and watched/read and/or listened to; and
the presenting unit is further configured to present, according to a second visual style, a part that is corresponding to the normally presented content and on the playback progress interface, wherein the second visual style is different from the first visual style.

10. The apparatus according to claim 8 or 9, further comprising:
an acquiring unit, configured to acquire data collection information, wherein the data collection information comprises at least one of operation information of a user on the playback progress interface, video collection information of audio-visual behavior of the user, and usage information of a device used by the user; wherein
the determining unit is specifically configured to:
determine the abnormally presented content in the digital media content according to the data collection information.

11. The apparatus according to claim 10, wherein the acquiring unit is specifically configured to:
acquire, from a video surveillance device, the video collection information that is in the video surveillance device and about the user; or
acquire, from the device used by the user, the usage information recorded by the used device according to a usage process of the user.

12. The apparatus according to claim 10 or 11, wherein the operation information comprises at least one of fast-forward operation information, rewind operation information, and dragging operation information that are of the user on the playback progress interface.

13. The apparatus according to any one of claims 9 to 12, wherein the determining unit is further configured to:
determine buffered content in the digital media content; and
the presenting unit is further configured to present, according to a third visual style, a part that is corresponding to the buffered content and on the playback progress interface, wherein the third visual style is different from the first visual style and the second visual style.

14. The method according to any one of claims 8 to 13, wherein the digital media content comprises at least one of video content, audio content, and text content.
